# EUROPEAN PATENT APPLICATION

(11) **EP 4 607 130 A2**
(43) Date of publication of application: **27.08.2025**
(21) Application number: 25189881.3
(22) Date of filing: 11.03.2021
(51) Int. Cl.: F26B 17/20

(54) **SOLID FECES TREATMENT APPARATUS AND INDIVIDUAL FECES TREATMENT SYSTEM INCLUDING SAME**

(30) Priority: 27.05.2020 US 202063030749 P
(62) Divisional of application: 21811919.6
(71) Applicant: Samsung Electronics Co., Ltd., Suwon-si, Gyeonggi-do 16677 (KR)
(72) Inventor: KIM, Yongkwon, 16678 Suwon-si (KR); KIM, Ginam, 16678 Suwon-si (KR); KIM, Mijong, 16678 Suwon-si (KR); SHIN, Hyunsuk, 16678 Suwon-si (KR); CHANG, Wonsuk, 16678 Suwon-si (KR)
(74) Representative: Elkington and Fife LLP

(57) **Abstract**

A solid feces treater includes a dehydrator extracting a liquid component from first solid feces to produce second solid feces, a dryer evaporating a liquid component of the second solid feces to produce third solid feces, and a combustor burning the third solid feces, wherein the second solid feces have a solid content of about 25 % to about 30 %, and the third solid feces have a solid content greater than or equal to about 90 % and less than about 100 %.

## Description

### TECHNICAL FIELD

The present disclosure relates to a solid feces treater and an individual feces treatment system including the same.

### BACKGROUND ART

Generally, feces discharged from households are processed all at once at a large-scale excreta treatment facilities. However, in some regions where such large-scale excreta treatment facilities are not sufficiently established, feces may not be properly processed, and may be thrown out near residential areas. This may cause sanitary and environmental problems.

Accordingly, a feces treatment apparatus which enables direct processing of feces in each household is required in such residential areas. As a household feces treatment apparatus is installed in a bathroom of a household, it should be small-sized. In addition, considering the possibility of shortage of available energy, a household feces treatment apparatus that processes faces using as little energy as possible is desired.

### DESCRIPTION OF EMBODIMENTS

### TECHNICAL PROBLEM

The present disclosure provides a small-sized solid feces treater and an individual feces treatment system.

The present disclosure provides a solid feces treater and an individual feces treatment system, which have reduced energy consumption.

The present disclosure provides a solid feces treater and an individual feces treatment system, which have reduced harmful gas emission.

However, the technical problems to be solved are not limited thereto.

### SOLUTION TO PROBLEM

According to an aspect, there is provided a treatment apparatus according to claim 1.

According to another aspect, there is provided a solid feces treater includes a dehydrator extracting a liquid component from first solid feces to produce second solid feces, a dryer evaporating a liquid component of the second solid feces to produce third solid feces, and a combustor burning the third solid feces, wherein the second solid feces may have a solid content of about 25 % to about 30 %, and the third solid feces may have a solid content greater than or equal to about 90 % and less than about 100 %.

The dehydrator may include a dehydration element, and the dehydration element may include a plurality of fixed discs and a plurality of moving discs, which are alternately arranged, and a dehydration screw penetrating the plurality of fixed discs and the plurality of moving discs, wherein the plurality of moving discs may move such that a center of each of the plurality of moving discs rotates around a centerline on which centers of the plurality of fixed discs are arranged.

A distance between a fixed disc and a moving disc immediately adjacent to each other, among the plurality of fixed discs and the plurality of moving discs, may be less than or equal to about 0.1 mm.

The dehydration element may include a first dehydration area and a second dehydration area arranged sequentially in a transfer direction of the dehydration screw, wherein, among the plurality of fixed discs and the plurality of moving discs, a distance between a fixed disc and a moving disc immediately adjacent to each other in the first dehydration area may be about 0.05 mm, and a distance between a fixed disc and a moving disc immediately adjacent to each other in the second dehydration area may be about 0.03 mm.

The dehydrator may further include a discharger including a discharge hole through which second solid feces produced from the dehydration element are discharged, and a cutter cutting the second solid feces discharged from the discharge hole, wherein the second solid feces cut by the cutter may have a pellet shape.

An internal diameter of each of the plurality of moving discs may be less than an internal diameter of each of the plurality of fixed discs.

The dehydrator may further include a pressure element applying pressure on second solid feces discharged from the dehydration element, wherein the second solid feces may be discharged between the pressure element and the dehydration element, and have a flake shape.

The dryer may include a first dry chamber into which the second solid feces are input, a first dry screw provided in the first dry chamber, a second dry chamber discharging the third solid feces, and a second dry screw provided in the second dry chamber, wherein the second dry screw may have a thermal resistance higher than that of the first dry screw.

The first dry screw may include aluminum, and the second dry screw includes stainless steel.

The first dry screw and the second dry screw may include a plurality of dry holes penetrating a thread of the first dry screw and at thread of the second dry screw.

Each of the first dry screw and the second dry screw may be provided in a pair, wherein a pair of first dry screws may be arranged such that threads of the first dry screws cross each other, and a pair of second dry screws may be arranged such that threads of the second dry screws cross each other.

The dryer may further include a third dry chamber provided between the first dry chamber and the second dry chamber, a third dry screw provided in the third dry chamber, a fourth dry chamber provided between the second dry chamber and the third dry chamber, and a fourth dry screw provided in the fourth dry chamber, wherein the second solid feces may be dried sequentially in the first dry chamber, the third dry chamber, the fourth dry chamber, and the second dry chamber.

The dryer may further include an intake element connected to the first dry chamber, and the intake element may circulate heat generated from the combustor in the dryer.

A lower portion of the second dry chamber may have a thermal conductivity higher than that of the first dry chamber.

The combustor may include a combustion drum defining a combustion path therein, a first grid plate provided at a lower portion of the combustion drum, and an ignition element combusting the third solid feces placed on the first grid plate.

The combustion drum may further include a plurality of first air holes provided under the first grid plate.

The combustion path may further include an air compression area in which air is compressed, and have a relatively narrow width in the air compression area.

The combustion drum may further include a plurality of second air holes provided adjacent to the air compression area.

The dryer may include a first dry chamber into which the second solid feces are input, a first dry screw provided in the first dry chamber, a second dry chamber discharging the third solid feces, and a second dry screw provided in the second dry chamber, wherein the second dry screw may have a thermal resistance higher than that of the first dry screw, and the combustion path may be connected to an internal space of the second dry chamber.

The dry chamber may further include a transfer element provided between the second dry chamber and the combustion drum, wherein the transfer element may transfer the third solid feces to the combustion path.

According to another aspect, an individual feces treatment system includes a toilet bowl, a liquid feces treatment apparatus receiving and treating liquid feces from the toilet bowl, a first solid feces treater receiving solid feces from the toilet bowl and water-treating the solid feces to produce first solid feces in a state of sludge, and a second solid feces treater receiving the first solid feces from the first solid feces treater and treating the first solid feces, wherein the second solid feces treater includes a dehydrator, a dryer, and a combustor, and wherein the dehydrator dehydrates the first solid feces to produce second solid feces having a solid content of about 25 % to about 30 %, the dryer dries the second solid feces to produce third solid feces having a solid content of about 90 % to about 100 %, and the combustor combusts the third solid feces.

According to another aspect, there is provided an individual treatment system according to claim 14.

### ADVANTAGEOUS EFFECTS OF DISCLOSURE

The present disclosure may provide a small-sized solid feces treater and an individual feces treatment system.

The present disclosure may provide a solid feces treater and an individual feces treatment system with reduced energy consumption.

The present disclosure may provide a solid feces treater and an individual feces treatment system with reduced harmful gas emission.

However, the effects of the present disclosure are not limited thereto.

### BRIEF DESCRIPTION OF DRAWINGS

FIG. 1 is a perspective view of a solid feces treater according to an example embodiment.
FIG. 2 is another perspective view of the solid feces treater of FIG. 1.
FIG. 3 is a cross-sectional view of the solid feces treater of FIG. 1 taken along the line I-I'.
FIG. 4 is a cross-sectional view taken along the line II-II' of FIG. 1.
FIG. 5 is a cross-sectional view taken along the line III-III' of FIG. 1.
FIG. 6 is an enlarged view of the AA region of FIG. 3.
FIG. 7 is a diagram illustrating the dehydration element of FIG. 6.
FIG. 8 is a diagram illustrating the ring assembly of FIG. 7.
FIG. 9 is a diagram illustrating the fixed ring of FIG. 8.
FIG. 10 is a diagram illustrating the moving ring of FIG. 8.
FIG. 11 is a diagram illustrating the discharger and the cutter of FIG. 6.
FIG. 12 is an enlarged view of the BB region of FIG. 3.
FIG. 13 is a perspective view of the dry screw of FIG. 12.
FIG. 14 is an enlarged view of the CC region of FIG. 3.
FIG. 15 is an enlarged view of the DD region of FIG. 4.
FIG. 16 is a diagram corresponding to the AA region of FIG. 3 to illustrate a process of treating solid feces.
FIG. 17 is a diagram corresponding to the BB region of FIG. 3 to illustrate a process of treating solid feces.
FIG. 18 is a diagram corresponding to the CC region of FIG. 3 to illustrate a process of treating solid feces.
FIG. 19 is a diagram corresponding to the DD region of FIG. 4 to illustrate a process of treating solid feces.
FIG. 20 is a cross-sectional view of a solid feces treater according to an example embodiment, corresponding to the line II-II' of FIG. 1.
FIG. 21 is an enlarged view of the FF region of FIG. 20.
FIG. 22 is a block diagram of an individual feces treatment system according an example embodiment.
FIG. 23 is a diagram corresponding to the AA region of FIG. 3 to illustrate a dehydrator according to an example embodiment.
FIG. 24 is a diagram corresponding to the AA region of FIG. 3 to illustrate a process of treating solid feces.

### BEST MODE

According to an aspect, a solid feces treater includes a dehydrator extracting a liquid component from first solid feces to produce second solid feces, a dryer evaporating a liquid component of the second solid feces to produce third solid feces, and a combustor burning the third solid feces, wherein the second solid feces may have a solid content of about 25 % to about 30 %, and the third solid feces may have a solid content greater than or equal to about 90 % and less than about 100 %.

According to another aspect, an individual feces treatment system includes a toilet bowl, a liquid feces treatment apparatus receiving and treating liquid feces from the toilet bowl, a first solid feces treater receiving solid feces from the toilet bowl and water-treating the solid feces to produce first solid feces in a state of sludge, and a second solid feces treater receiving the first solid feces from the first solid feces treater and treating the first solid feces, wherein the second solid feces treater includes a dehydrator, a dryer, and a combustor, and wherein the dehydrator dehydrates the first solid feces to produce second solid feces having a solid content of about 25 % to about 30 %, the dryer dries the second solid feces to produce third solid feces having a solid content of about 90 % to about 100 %, and the combustor combusts the third solid feces.

### MODE OF DISCLOSURE

Hereinafter, embodiments will be described in detail with reference to the accompanying drawings. In the drawings, Like reference numerals in the drawings denote like elements, and sizes of components in the drawings may be exaggerated for clarity and convenience of explanation. Meanwhile, embodiments described below are provided only as an example, and thus can be embodied in various forms.

Hereinafter, it will be understood that when a component is "on" another component, it can be directly on the other component or indirectly over the other component in a non-contact manner.

An expression used in the singular encompasses the expression of the plural, unless it has a clearly different meaning in the context. When a portion "includes" an element, another element may be further included, rather than excluding the existence of the other element, unless otherwise described.

Further, the term "part" used herein refers to a unit processing at least one function or operation.

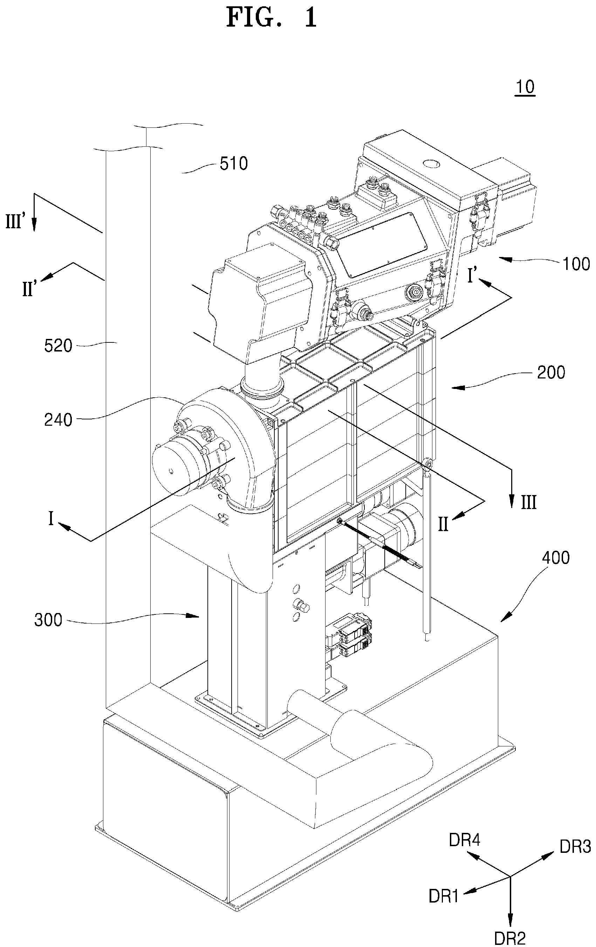

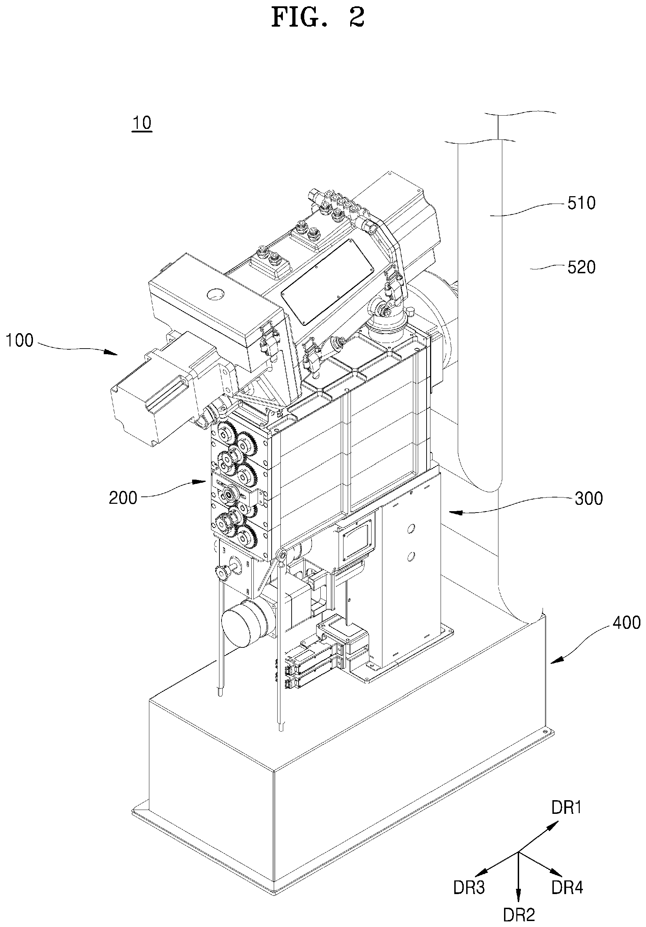

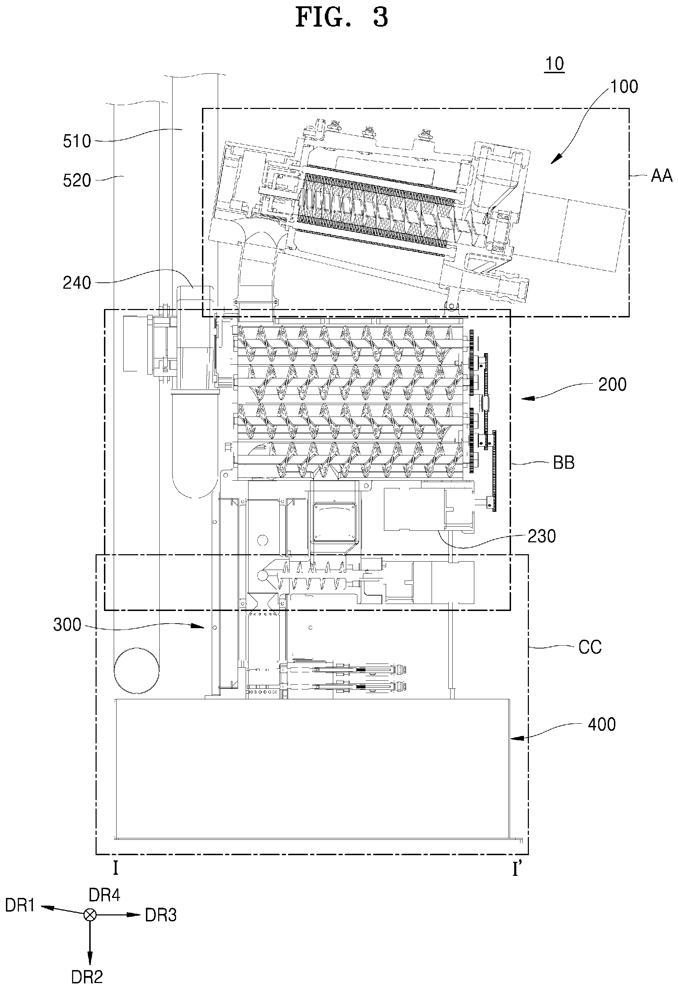

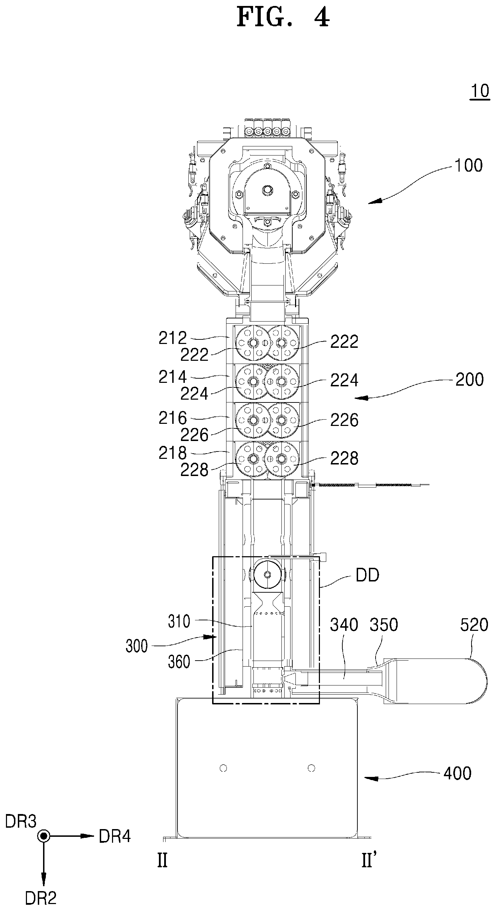

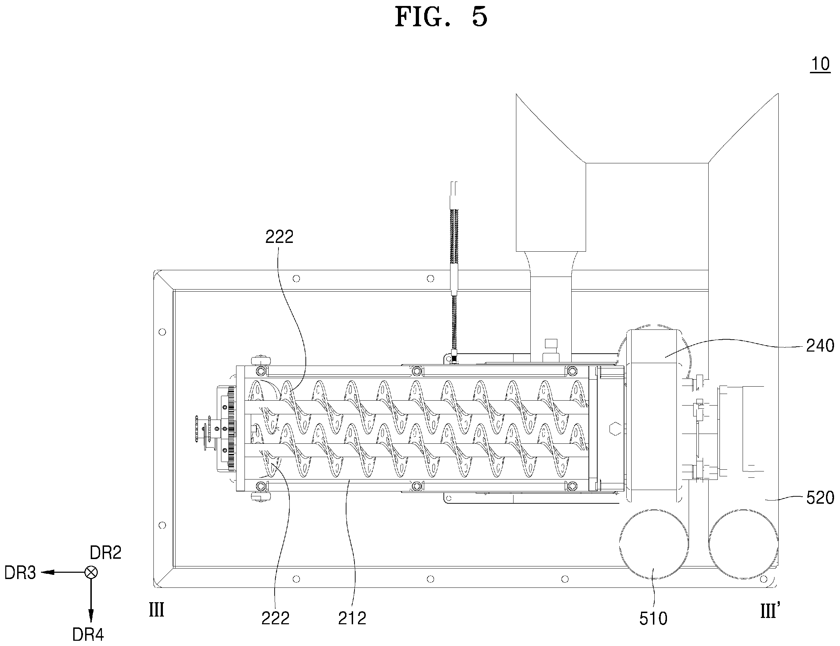

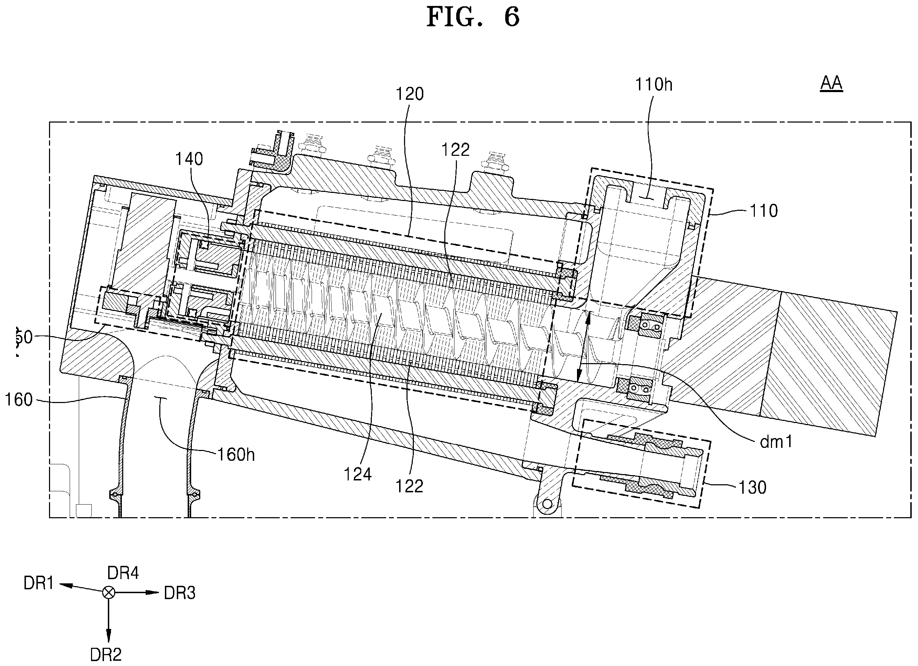

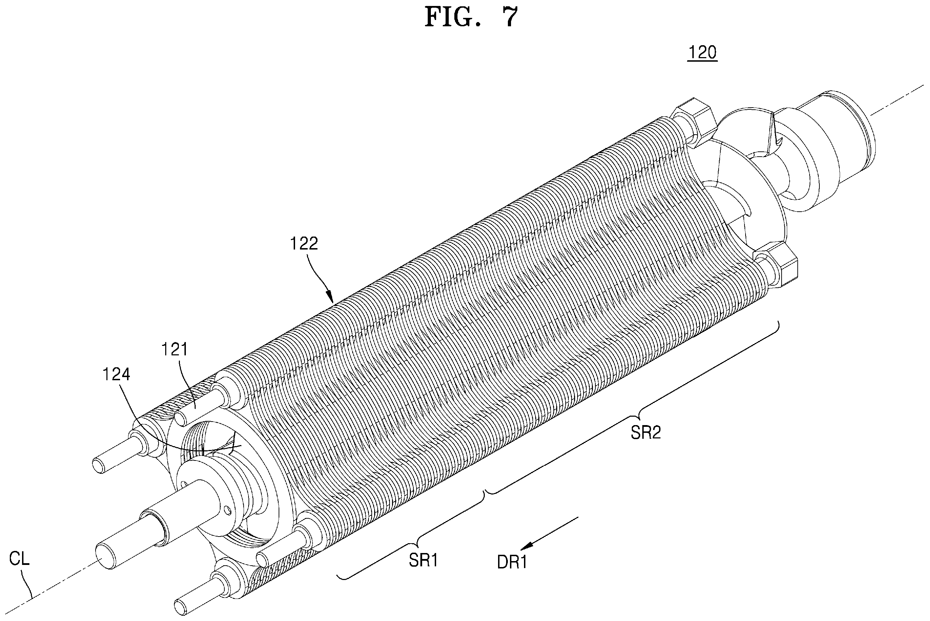

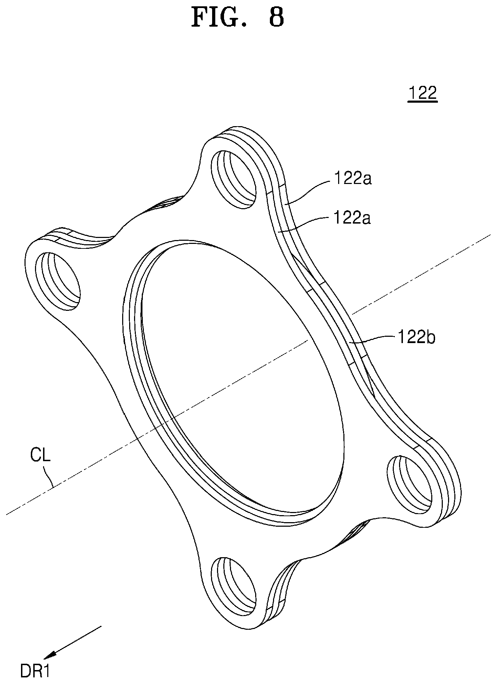

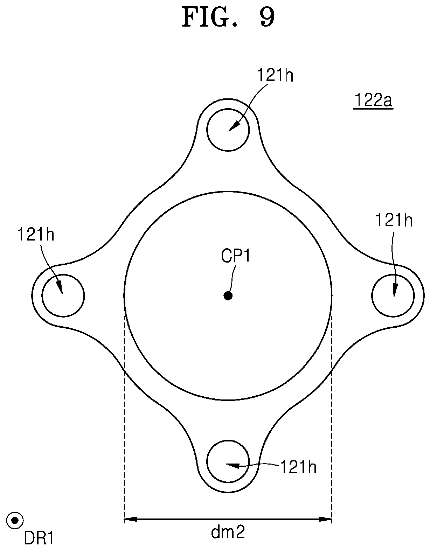

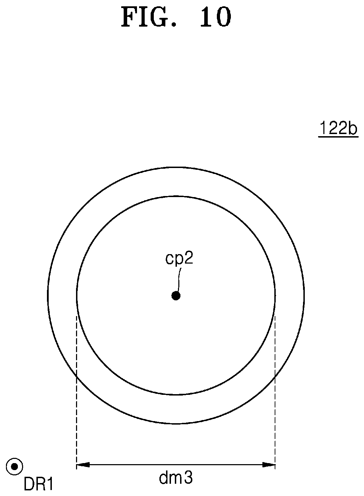

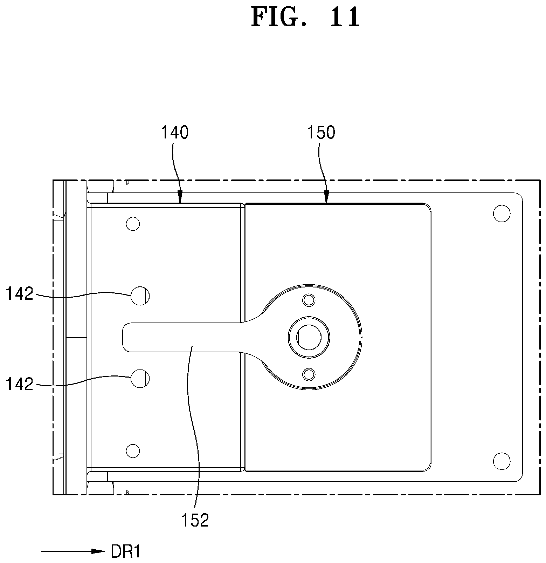

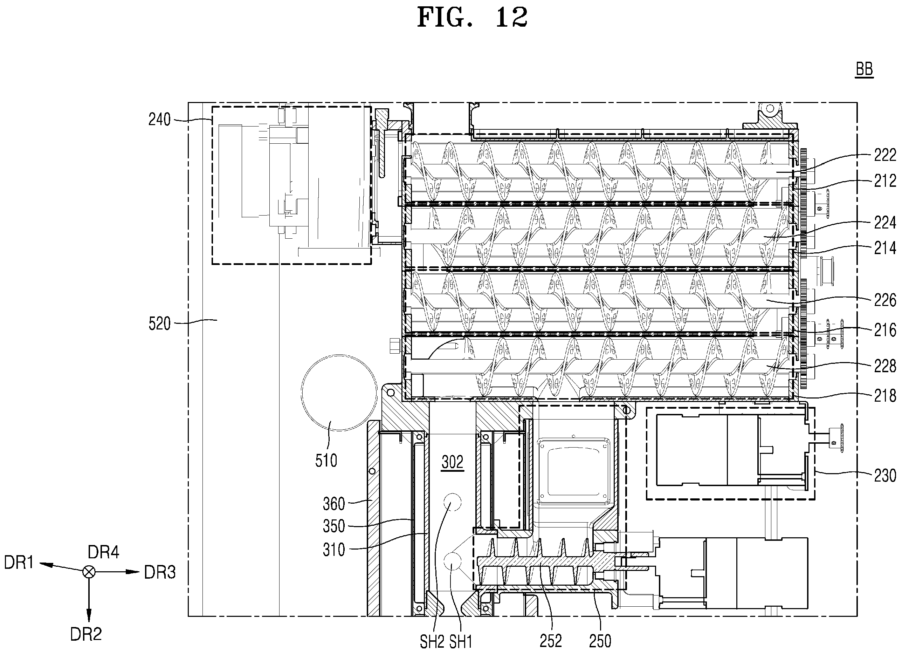

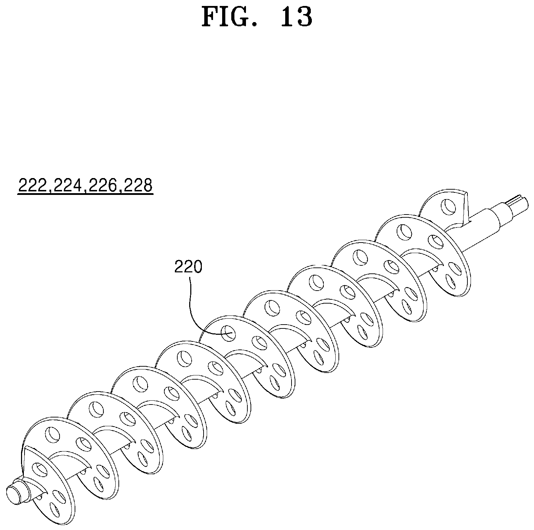

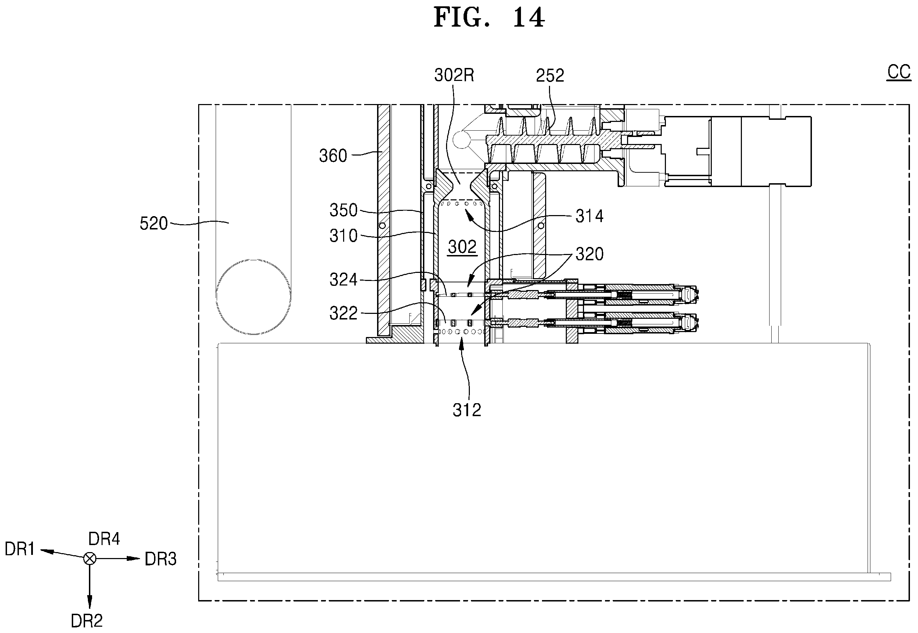

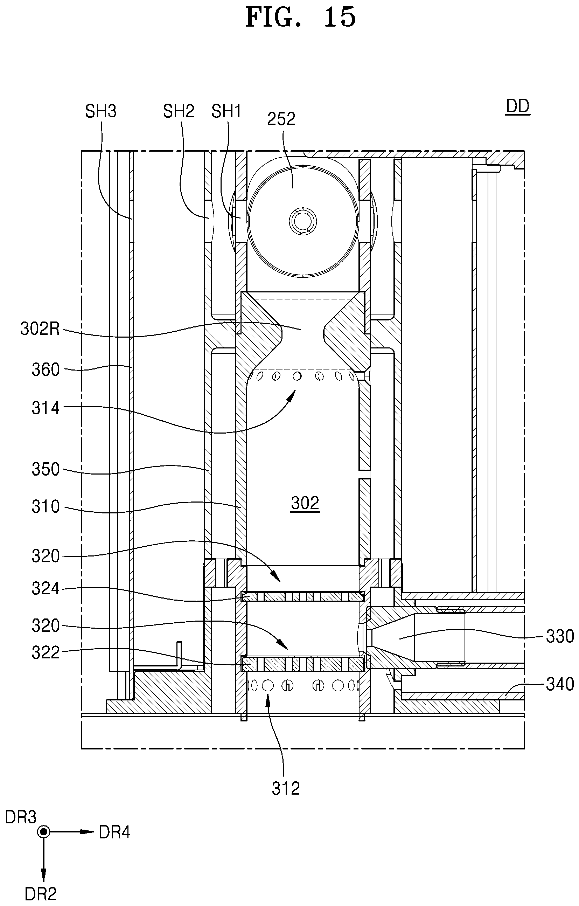

FIG. 1 is a perspective view of a solid feces treater according to an example embodiment. FIG. 2 is another perspective view of the solid feces treater of FIG. 1. FIG. 3 is a cross-sectional view of the solid feces treater of FIG. 1 taken along the line I-I'. FIG. 4 is a cross-sectional view taken along the line II-II' of FIG. 1. FIG. 5 is a cross-sectional view taken along the line III-III' of FIG. 1. FIG. 6 is an enlarged view of the AA region of FIG. 3. FIG. 7 is a diagram illustrating the dehydration element of FIG. 6. FIG. 8 is a diagram illustrating the ring assembly of FIG. 7. FIG. 9 is a diagram illustrating the fixed ring of FIG. 8. FIG. 10 is a diagram illustrating the moving ring of FIG. 8. FIG. 11 is a diagram illustrating the discharger and the cutter of FIG. 6. FIG. 12 is an enlarged view of the BB region of FIG. 3. FIG. 13 is a perspective view of the dry screw of FIG. 12. FIG. 14 is an enlarged view of the CC region of FIG. 3. FIG. 15 is an enlarged view of the DD region of FIG. 4.

With reference to FIGS. 1 to 15, a solid feces treater 10 may be provided. The solid feces treater 10 may reduce or remove liquid components in solid feces and then incinerate the solid feces. The solid feces treater 10 may be installed and used in each household or portable toilet. For example, the solid feces treater 10 may treat solid feces discharged from a single toilet bowl. The solid feces treater 10 may include a dehydrator 100, a dryer 200, a first pipe 510, a combustor 300, a recollect container 400, and a second pipe 520.

As illustrated in FIG. 6, the dehydrator 100 may include a first solid feces input element 110, a dehydration element 120, a liquid component discharge pipe 130, a discharger 140, a cutter 150, and a second solid feces discharger 160. The first solid feces input element 110 may receive first solid feces from the outside of the dehydrator 100. The first solid feces may refer to sludge obtained by water-treating the feces. A solid content of the first solid feces may be 2 % to 3 %. The solid content may refer to a ratio of solid components in the feces. The first solid feces input element 110 may include a first solid feces input hole 110h through which the first solid feces are input.

The dehydration element 120 may include a ring assembly 122 and a dehydration screw 124. The dehydration element 120 may dehydrate the first solid feces to generate second solid feces. A solid content of the second solid feces may be higher than that of the first solid feces. For example, the solid content of the second solid feces may be 25 % to 30 %.

As illustrated in FIGS. 7 to 10, the ring assembly 122 may include a plurality of fixed rings 122a and a plurality of moving rings 122b. For concise description, two fixed rings 122a and one moving ring 122b are illustrated. The plurality of fixed rings 122a may be arranged in a first direction DR1. The plurality of fixed rings 122a may each have a fixed position. For example, the plurality of fixed rings 122a may be arranged on a centerline CL formed of center points cp1 of the plurality of fixed rings 122a extending in the first direction DR1. An internal diameter dm2 of the plurality of fixed rings 122a may be greater than a diameter dm1 of the dehydration screw 124.

The plurality of moving rings 122b may be arranged between a pair of adjacent fixed rings 122a. Although FIG. 8 illustrates that one moving ring 122b is arranged between a pair of fixed rings 122a, this is only an example. In another example, two or three moving rings 122b may be provided between a pair of immediately adjacent fixed rings 122a. An internal diameter dm3 of the plurality of moving rings 122b may be less than the internal diameter dm2 of the plurality of fixed rings 122a and the diameter dm1 of the dehydration screw 124. One moving ring 122b may be in contact with a thread of the dehydration screw 124 at one point at a time. When the dehydration screw 124 rotates, a contact point of the thread and one moving ring 122b may move along an internal circumference of the moving ring 122b. As the internal diameter dm3 of the moving ring 122b is less than the diameter dm1 of the dehydration screw 124, the thread of the dehydration screw 124 may push the moving ring 122b at the contact point. The moving ring 122b may be pushed by the thread of the dehydration screw 124 and moved in an outward direction (i.e., a radial direction). When the dehydration screw 124 rotates, a point at which the moving ring 122b is pushed by the thread of the dehydration screw 124 may move along the internal circumference of the moving ring 122b. Accordingly, the plurality of moving rings 122b may move such that center points cp2 of the plurality of moving rings 122b rotate around the centerline CL.

A distance between immediately adjacent rings (e.g., immediately adjacent fixed ring 122a and moving ring 122b or a pair of immediately adjacent moving rings 122b) may be less than or equal to 0.1 mm. The ring assembly 122 may include a first dehydration area SR1 and a second dehydration area SR2 arranged in the first direction DR1. For example, a length ratio between the first dehydration area SR1 and the second dehydration area SR2 may be 2:1. A distance between a pair of immediately adjacent rings may be less in the second dehydration area SR2 than in the first dehydration area SR1. For example, a distance between a pair of immediately adjacent rings may be about 0.05 mm in the first dehydration area SR1, and a distance between a pair of immediately adjacent rings may be about 0.03 mm in the second dehydration area SR2. Due to the varying distance between a pair of immediately adjacent rings in the first dehydration area SR1 and the second dehydration area SR2, the dehydration efficiency of the first solid feces may be improved. The liquid component removed from the first solid feces in the first and second dehydration areas SR1 and SR2 may be discharged to the outside through the liquid component discharge pipe 130. The first solid feces which have passed through the first and second dehydration areas SR1 and SR2 may be referred to as the second solid feces.

The dehydration screw 124 may extend in the first direction DR1. The dehydration screw 124 may transfer the first solid feces in the first direction DR1. The dehydration screw 124 may pass through the ring assembly 122. The dehydration screw 124 may supply the second solid feces to the discharger 140.

The discharger 140 may discharge the second solid feces transferred from the dehydration screw 124 in a required thickness. As illustrated in FIG. 11, the discharger 140 may discharge the second solid feces through a discharge hole 142. The size of the discharge hole 142 may be determined such that the second solid feces have a required thickness. Although the drawings illustrate that the discharge hole 142 has a circular shape, this is only an example. In another example, the discharge hole 142 may have a polygonal shape.

The cutter 150 may cut the second solid feces discharged from the discharge hole 142 such that the second solid feces have a required length. The cutter 150 may include a blade 152 rotating at a steady speed. The blade 152 may be arranged adjacent to the discharge hole 142. During when the second solid feces are discharged from the discharge hole 142, the blade 152 may rotate and cut the second solid feces into a certain length. The second solid feces may have a pellet shape by the discharger 140 and the cutter 150.

The second solid feces discharger 160 may be provided below the discharger 140 and the cutter 150. The second solid feces discharger 160 may include a second solid feces discharge outlet 160h. The second solid feces cut by the cutter 150 may be inserted into the second solid feces discharge outlet 160h.

As illustrated in FIG. 12, the dryer 200 may include a first dry chamber 212, a second dry chamber 214, a third dry chamber 216, a fourth dry chamber 218, a first dry screw 222, a second dry screw 224, a third dry screw 226, a fourth dry screw 228, a dry screw driving element 230, an intake element 240, and a transfer element 250. The dryer 200 may evaporate liquid components of the second solid feces. The first dry chamber 212, the second dry chamber 214, the third dry chamber 216, and the fourth dry chamber 218 may be arranged in order in a second direction DR2. The first dry chamber 212 may be arranged most adjacent to the dehydrator 100. The fourth dry chamber 218 may be arranged most adjacent to the combustor 300. The fourth dry chamber 218 may include a material having a higher heat conductivity than the first to third dry chambers 212, 214, and 216. For example, the fourth dry chamber 218 may include copper alloy, and the first to third dry chambers 212, 214, and 216 may include stainless steel (e.g., SUS). Accordingly, the heat generated from the combustor 300 may be conducted smoothly along the fourth dry chamber 218.

The internal spaces of the first to fourth dry chambers 212, 214, 216, and 218 may extend in a third direction DR3 intersecting with the first direction DR1 and the second direction DR2. The internal spaces of the first to fourth dry chambers 212, 214, 216, and 218 may be connected to each other in order. Each of the first to fourth dry chambers 212, 214, 216, and 218 may have an entrance and an exit. The entrances of the first to fourth dry chambers 212, 214, 216, and 218 may be openings through which the second solid feces are input into the first to fourth dry chambers 212, 214, 216, and 218. The exits of the first to third dry chambers 212, 214, and 216 may be openings through which the second solid feces are discharged from the first to third dry chambers 212, 214, and 216. The exit of the fourth dry chamber 218 may be an opening through which third solid feces are discharged from the fourth dry chamber 218. The entrance of the first dry chamber 212 may be connected with the second solid feces discharge outlet 160h. The internal space of the fourth dry chamber 218 may be connected with an internal space of the transfer element 250 and an internal space of a combustion drum 310 to be described. The entrances of the first to fourth dry chambers 212, 214, 216, and 218 may be respectively apart from the exits of the first to fourth dry chambers 212, 214, 216, and 218 in the third direction DR3. The exits of the first to third dry chambers 212, 214, and 216 may be respectively connected with the entrances of the second to fourth dry chambers 214, 216, and 218. Accordingly, the internal spaces of the first to fourth dry chambers 212, 214, 216, and 218 may be connected to each other in zigzags.

As illustrated in FIG. 4, the first dry screw 222, the second dry screw 224, the third dry screw 226, and the fourth dry screw 228 may be provided in the first to fourth dry chambers 212, 214, 216, and 218, respectively. The first to fourth dry screws 222, 224, 226, and 228 may be substantially identical to each other. Each of the first to fourth dry screws 222, 224, 226, and 228 may be provided in pairs. For concise description, a pair of first dry screws 222 is described, and any redundant descriptions on the second to fourth dry screws 224, 226, and 228 are omitted. The first dry screws 222 of the pair of first dry screws 222 may be substantially identical to each other. The pair of first dry screws 222 may be arranged such that threads of the first dry screws 222 intersect with each other. The pair of first dry screws 222 may extend in the third direction DR3.

The first to fourth dry screws 222, 224, 226, and 228 may be operated by the dry screw driving element 230. For example, the dry screw driving element 230 may include a motor. Chains and gears transmitting power of the dry screw driving element 230 to the first to fourth dry screws 222, 224, 226, and 228 may be provided between the first to fourth dry screws 222, 224, 226, and 228.

The second solid feces input into the first dry chamber 212 may be transferred along a zigzag path in the internal spaces of the first to fourth dry chambers 212, 214, 216, and 218. Specifically, the second solid feces may be transferred in the third direction DR3 by the first and third dry screws 222 and 226 in the first and third dry chambers 212 and 216, and may be transferred in an opposite direction of the third direction DR3 by the second and fourth dry screws 224 and 228 in the second and fourth dry chambers 214 and 218.

As illustrated in FIG. 13, the first to fourth dry screws 222, 224, 226, and 228 may include a plurality of dry holes 220 penetrating the threads of the first to fourth dry screws 222, 224, 226, and 228. Although the drawings illustrate that the dry holes 220 have a circular shape, this is only an example. In another example, the plurality of dry holes 220 may have a polygonal shape. The plurality of dry holes 220 may move hot air generated by the combustor 300 inside the first to fourth dry chambers 212, 214, 216, and 218 or facilitate the flow of hot air. The hot air may be supplied into the fourth dry chamber 218 and may sequentially pass through the third dry chamber 216, the second dry chamber 214, and the first dry chamber 212, drying the second solid feces in the first to fourth dry chambers 212, 214, 216, and 218.

The intake element 240 may be connected with the first dry chamber 212. An inlet of the intake element 240 may be arranged adjacent to an area in which the second solid feces are input into the first dry chamber 212. The intake element 240 may suck air in the first dry chamber 212. Accordingly, the hot air generated by the combustor 300 may move from the fourth dry chamber 218 to the first dry chamber 212. An outlet of the intake element 240 may be connected with the first pipe 510. The hot air that has flowed to the intake element 240 from the first dry chamber 212 may be discharged to the outside of the solid feces treater 10 through the first pipe 510.

The transfer element 250 may receive the third solid feces from the fourth dry chamber 218. The third solid feces may refer to the second solid feces dried by passing through the first to fourth dry chambers 212, 214, 216, and 218. The transfer element 250 may transfer the third solid feces to the combustor 300 by using a transfer screw 252. For example, the transfer element 250 may input the third solid feces to a combustion path 302 to be described.

As illustrated in FIGS. 14 and 15, the combustor 300 may include the combustion drum 310, a first grid plate 322, a second grid plate 324, an igniter 330, an igniter case 340, a first combustion drum case 350, and a second combustion drum case 360. The combustion path 302 may be defined by the combustion drum 310. The combustion path 302 may extend in the second direction DR2. The combustion path 302 may be connected with the internal space of the fourth dry chamber 218. The hot air generated by combusting the third solid feces may pass through the combustion path 302 and flow into the fourth dry chamber 218.

The first grid plate 322 may be provided at a lower portion of the combustion path 302. The first grid plate 322 may move in the third direction DR3 of in the opposite direction of the third direction DR3 to open or close the combustion path 302. When the third solid feces are input to the combustion path 302 by the transfer element 250, the first grid plate 322 may block the combustion path 302. The third solid feces input to the combustion path 302 by the transfer element 250 may be transferred onto the first grid plate 322. For example, the third solid feces may drop on the first grid plate 322. The first grid plate 322 may support the third solid feces while the third solid feces are incinerated. After the incineration of the third solid feces is completed, the first grid plate 322 may open the combustion path 302. The ashes generated by the incineration of the third solid feces may be transferred to the recollect container from the first grid plate 322. The first grid plate 322 may include a plurality of grid holes 320 extending in the second direction DR2. The plurality of grid holes 320 may be a passage through which oxygen and combustion gases flow.

The second grid plate 324 may be provided on the first grid plate 322. The first grid plate 322 and the second grid plate 324 may be apart from each other in the second direction DR2. The second grid plate 324 may move in the third direction DR3 of in the opposite direction of the third direction DR3 to open or close the combustion path 302. During when the third solid feces are input from the transfer element 250 to the first grid plate 322, the second grid plate 324 may open the combustion path 302. During the incineration of the third solid feces, the second grid plate 324 may close the combustion path 302. The second grid plate 324 may include a plurality of grid holes 320 extending in the second direction DR2. The plurality of grid holes 320 may be a passage through which oxygen and combustion gases flow.

The combustion drum 310 may include a plurality of first oxygen holes 312, a plurality of second oxygen holes 314, and an air compression area 302R. The plurality of first oxygen holes 312 and the plurality of second oxygen holes 314 may supply oxygen to the combustion path 302 from the outside of the combustion drum 310. The plurality of first oxygen holes 312 may be provided adjacent to the first grid plate 322. For example, the plurality of first oxygen holes 312 may be provided below the first grid plate 322. The plurality of first oxygen holes 312 may be arranged in a circumferential direction of the combustion drum 310. The plurality of second oxygen holes 314 may be arranged adjacent to the transfer element 250. The plurality of second oxygen holes 314 and the plurality of first oxygen holes 312 may be apart from each other in the second direction DR2. The plurality of second oxygen holes 314 may be arranged in a circumferential direction of the combustion drum 310.

The air compression area 302R may be an area of the combustion path 302, defined by an inner side of the combustion drum 310 protruding convexly. The air compression area 302R may be provided between the transfer element 250 and the plurality of second oxygen holes 314. A width of the air compression area 302R may be less than a width of areas of the combustion path 302 other than the air compression area 302R. Accordingly, air passing through the air compression area 302R may be compressed, and the temperature of the air may increase. The harmful gases generated during the combustion of the third solid feces may be burned and removed in the air compression area 302R. For example, nitrogen oxide (NOₓ) may be burned and decomposed into nitrogen (N₂) in the air compression area 302R, and carbon monoxide (CO) may be burned and oxidized into carbon dioxide (CO₂) in the air compression area 302R.

The igniter 330 may be provided between the first grid plate 322 and the second grid plate 324. The igniter 330 may ignite the third solid feces on the first grid plate 322. The ignition method of the igniter 330 may be determined according to the need. For example, the igniter 330 may use an electric ignition method or a gas ignition method.

The first combustion drum case 350 may surround the combustion drum 310. The first combustion drum case 350 may be apart from the combustion drum 310.

The second combustion drum case 360 may surround the first combustion drum case 350. The second combustion drum case 360 may apart from the first combustion drum case 350. Oxygen may move between the first combustion drum case 350 and the combustion drum 310 and flow into the combustion path 302 through the plurality of first oxygen holes 312 and the plurality of second oxygen holes 314.

A first window SH1, a second window SH2, and a third window SH3 may be provided at the combustion drum 310, the first combustion drum case 350, and the second combustion drum case 360, respectively to see the combustion path 302 from the outside of the second combustion drum case 360. The first to third windows SH1, SH2, and SH3 may be arranged to overlap each other in a fourth direction DR4. The first to third windows SH1, SH2, and SH3 may be transparent and have thermal resistance. For example, the first to third windows SH1, SH2, and SH3 may include glass or plastic.

The igniter case 340 may be apart from the igniter 330 and surround the igniter 330. A space between the igniter case 340 and the igniter 330 may be connected with a space between the first combustion drum case 350 and the combustion drum 310. The igniter case 340 may be connected with the second pipe 520. The second pipe 520 may be a pipe into which oxygen flows from the outside of the solid feces treater 10. The oxygen which has flowed through the second pipe 520 may pass through the space between the igniter case 340 and the igniter 330 and flow between the first combustion drum case 350 and the combustion drum 310.

The recollect container 400 may be provided below the combustor. The ashes generated by the incineration of the third solid feces may be transferred to the recollect container 400 when the first grid plate 322 is open. For example, the ashes may drop into the recollect container 400. A separable drawer (not shown) may be provided in the recollect container 400. The ashes may be collected in the drawer. A user of the solid feces treater 10 may separate the separable drawer from the recollect container 400 and remove the ashes.

Hereinafter, a process of treating solid feces by using the solid feces treater 10 described with reference to FIGS. 1 to 15 is described.

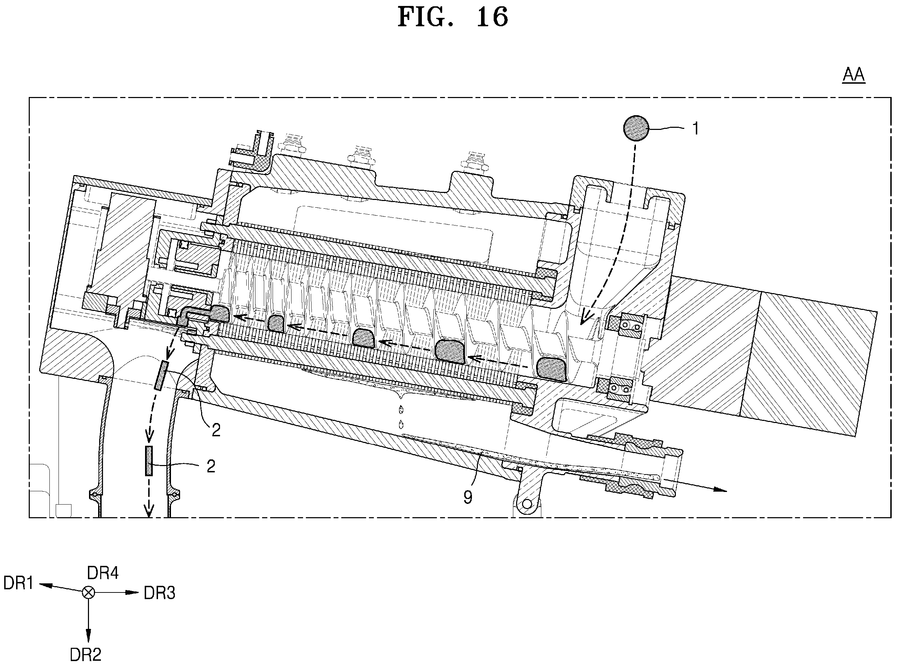

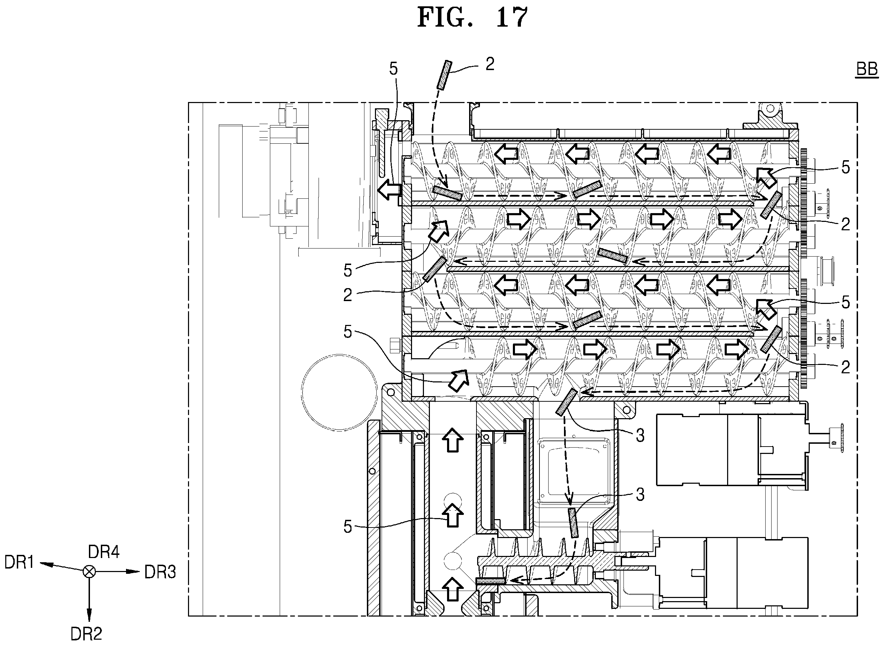

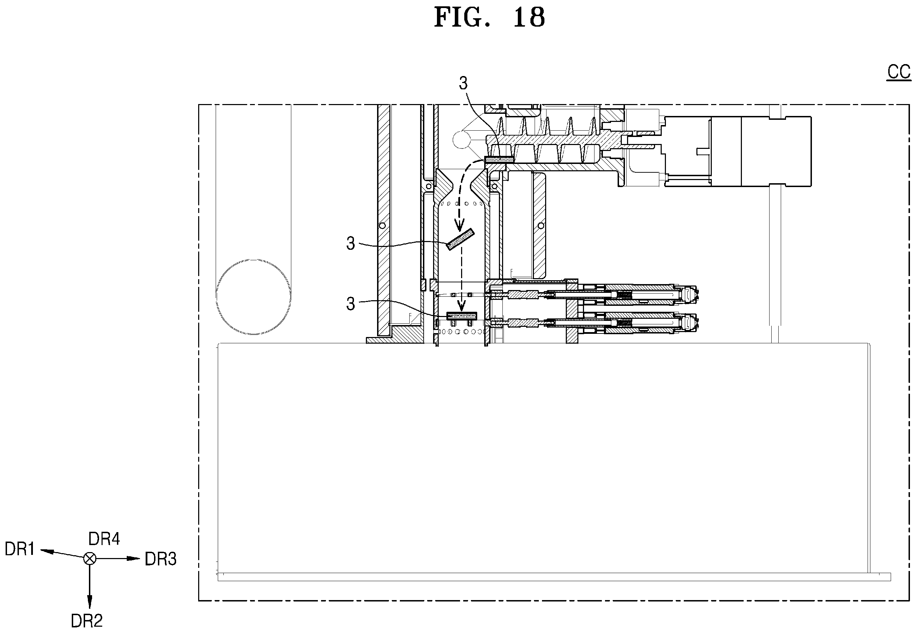

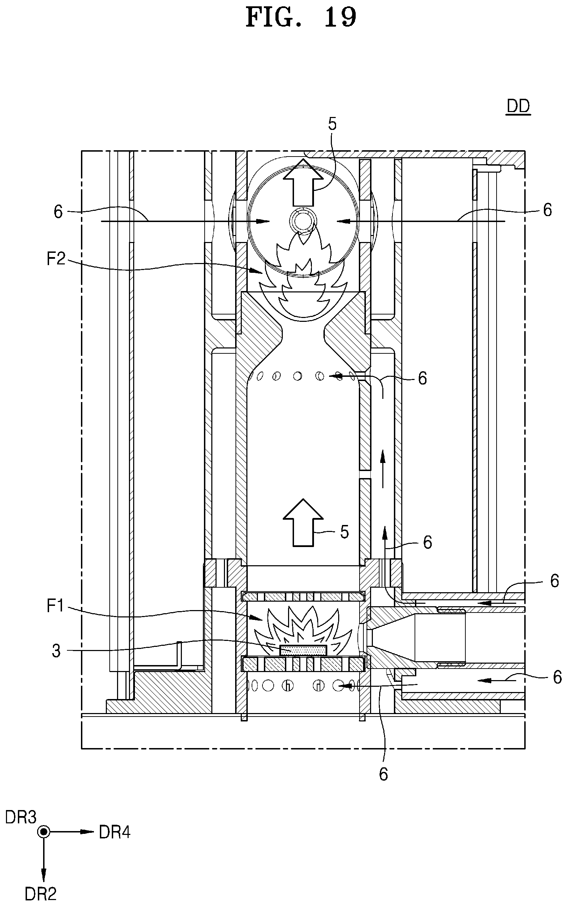

FIG. 16 is a diagram corresponding to the AA region of FIG. 3 to illustrate a process of treating solid feces. FIG. 17 is a diagram corresponding to the BB region of FIG. 3 to illustrate a process of treating solid feces. FIG. 18 is a diagram corresponding to the CC region of FIG. 3 to illustrate a process of treating solid feces. FIG. 19 is a diagram corresponding to the DD region of FIG. 4 to illustrate a process of treating solid feces. For concise description, reference numerals for the components of the solid feces treater 10 are omitted. The reference numerals for the components of the solid feces treater 10 are as shown in FIGS. 1 to 15.

With reference to FIG. 16, first solid feces 1 may be input to the dehydrator 100 through the first solid feces input hole 110h. The first solid feces 1 may refer to sludge obtained by water-treating the feces. For example, a solid content of the first solid feces 1 may be 2 % to 3 %.

The first solid feces 1 may be transferred by the dehydration screw 124. A liquid component 9 included in the first solid feces 1 may be discharged between the plurality of fixed rings 122a and the plurality of moving rings 122b. The liquid component 9 may be discharged to the outside of the dehydrator 100 through the liquid component discharge pipe 130. The dehydration efficiency of the first solid feces 1 may be greater when a distance between the rings 122a and 122b arranged in the first dehydration area SR1 adjacent to the first solid feces input hole 110h is greater than a distance between the rings 122a and 122b arranged in the second dehydration area SR2 adjacent to the second solid feces discharge outlet 160h than when the distance between the rings 122a and 122b is constant.

The first solid feces 1 dehydrated at the dehydration element 120 may be referred to as second solid feces 2. A solid content of the second solid feces 2 may be 25 % to 30 %. The second solid feces 2 may be input to the discharger 140 by the dehydration screw 124. The second solid feces 2 may be discharged in a certain width through the discharge hole 142.

The cutter 150 may cut the second solid feces 2 discharged from the discharge hole 142 by using the blade 152. Accordingly, the second solid feces 2 may have a pellet shape having a certain width and a certain length. The second solid feces 2 having a pellet shape may be transferred to the second solid feces discharge outlet 160h. For example, the second solid feces 2 may drop into the second solid feces discharge outlet 160h.

With reference to FIG. 17, the second solid feces 2 may be input to the first dry chamber 212 through the entrance of the first dry chamber 212. The second solid feces 2 may be transferred in the first to fourth dry chambers 212, 214, 216, and 218 by the first to fourth dry screws 222, 224, 226, and 228. The hot air generated at the combustor 300 may pass through the fourth dry chamber 218, the third dry chamber 216, the second dry chamber 214, and the first dry chamber 212 in this order. The plurality of dry holes 220 may be formed at the first to fourth dry screws 222, 224, 226, and 228 to facilitate the flow of hot air. The second solid feces 2 may be dried by hot air when passing through the first to fourth dry chambers 212, 214, 216, and 218. When hot air is not supplied in the first to fourth dry chambers 212, 214, 216, and 218 (e.g., when the combustion process is not performed at the combustor 300), the second solid feces may be naturally dried in the first to fourth dry chambers 212, 214, 216, and 218. The second solid feces 2 which are dried while passing through the first to fourth dry chambers 212, 214, 216, and 218 may be referred to as third solid feces 3. A solid content of the third solid feces 3 may be 90 % to 100 %. The third solid feces 3 may be transferred from the fourth dry chamber 218 to the transfer element 250. For example, the third solid feces 3 may drop into the transfer element 250.

With reference to FIG. 18, the transfer screw 252 in the transfer element 250 may transfer the third solid feces 3 to the combustor 300. The third solid feces 3 may be transferred from the transfer element 250 onto the first grid plate 322. For example, the third solid feces 3 may drop on the first grid plate 322. When the third solid feces 3 are supplied on the first grid plate 322, the second grid plate 324 may be in an open state.

With reference to FIG. 19, after the third solid feces 3 are supplied on the first grid plate 322, the second grid plate 324 may be closed. The igniter 330 may ignite the third solid feces 3 supplied on the first grid plate 322. Combustion of the third solid feces 3 may be referred to as a first combustion F1. Hot air 5 may be generated by the first combustion F1. The hot air 5 may rise through the combustion path 302. The hot air 5 may further rise in temperature in the air compression area 302R. In an embodiment, the hot air 5 may include harmful gases (e.g., nitrogen oxide (NOₓ) and carbon monoxide (CO)). The harmful gases may be combusted in the air compression area 302R. Combustion of harmful gases may be referred to as a second combustion F2. The harmful gases may be removed by the second combustion F2. For example, nitrogen oxide (NOₓ) may be decomposed into nitrogen (N₂), and carbon monoxide (CO) may be oxidized into carbon dioxide (CO₂).

The combustion of the third solid feces 3 may leave ashes. After the combustion process of the third solid feces 3, the first grid plate 322 is opened, and the ashes may be accommodated in the recollect container 400.

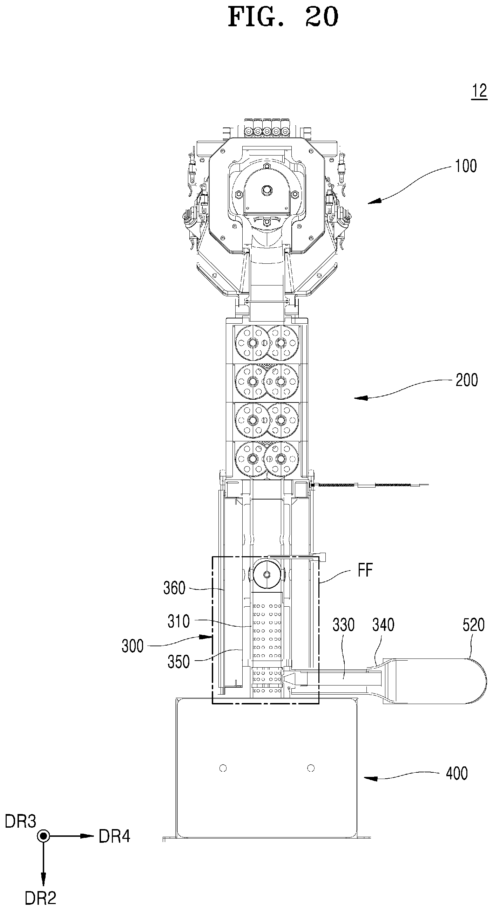

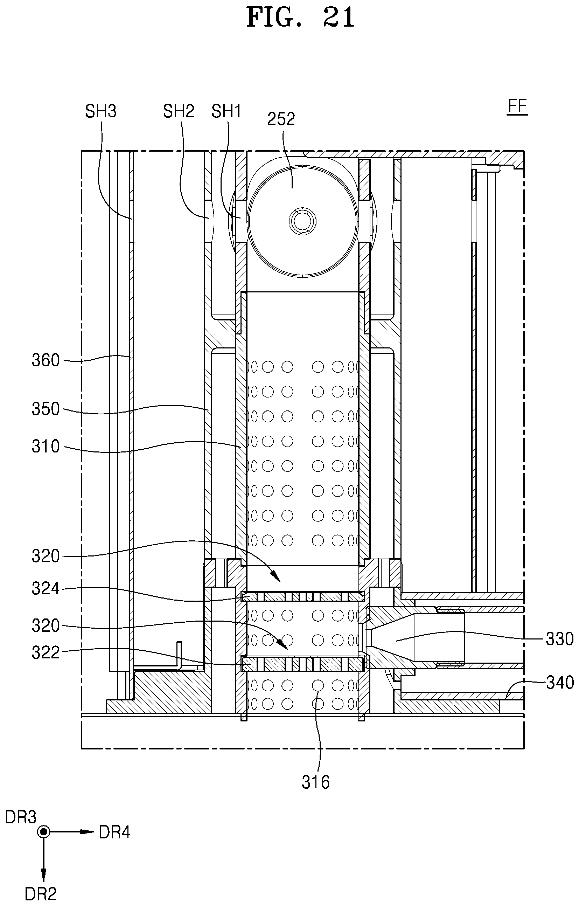

FIG. 20 is a cross-sectional view of a solid feces treater according to an example embodiment, corresponding to the line II-II' of FIG. 1. FIG. 21 is an enlarged view of the FF region of FIG. 20. For the sake of concise explanation, any description substantially identical to the explanations made with reference to FIGS. 1 to 15 may be omitted.

With reference to FIGS. 20 and 21, a solid feces treater 12 may be provided. The solid feces treater 12 may be substantially identical to the solid feces treater 12 with a difference in the combustor 300.

The combustor 300 may include the combustion drum 310, the first grid plate 322, the second grid plate 324, the igniter 330, the igniter case 340, the first combustion drum case 350, and the second combustion drum case 360. The first grid plate 322, the second grid plate 324, the igniter 330, the igniter case 340, the first combustion drum case 350, and the second combustion drum case 360 may respectively be substantially the same as described with reference to FIGS. 1 to 15.

However, unlike the description made with reference to FIGS. 1 to 15, the combustion drum 310 may include a plurality of third air holes 316 instead of the plurality of first air holes and the plurality of second air holes. The plurality of third air holes 316 may be arranged in a circumferential direction and a longitudinal direction (i.e., the second direction DR2) of the combustion drum 310. The plurality of third air holes 316 may be provided from an area adjacent to the transfer element 250 to an area between the first grid plate 322 and the recollect container 400. The plurality of third air holes 316 may provide more oxygen to the combustion path 302 than the plurality of first air holes and the plurality of second air holes. Accordingly, the third solid feces on the first grid plate 322 may be completely combusted. As such, a second combustion process (F2 of FIG. 18) to remove harmful gases is not required, and the combustion path 302 may not include an air compression area (302R of FIG. 14) described with reference to FIGS. 1 to 15. For example, the combustion path 302 may have a constant width.

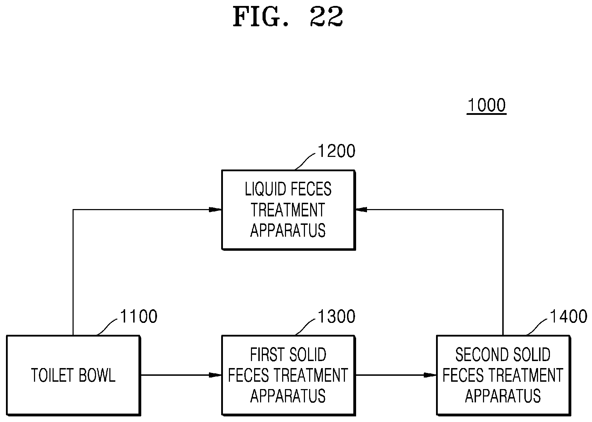

FIG. 22 is a block diagram of an individual feces treatment system according an example embodiment. For the sake of concise explanation, any description substantially identical to the explanations made with reference to FIGS. 1 to 15, FIG. 20, and FIG. 21 may be omitted.

With reference to FIG. 22, an individual feces treatment system 1000 may be provided. The individual feces treatment system 1000 may include a toilet bowl 1100, a liquid feces treatment apparatus 1200, a first solid feces treater 1300, and a second solid feces treater 1400.

The toilet bowl 1100 may collect feces from a user. The toilet bowl 1100 may separate and collect solid feces and liquid feces. For example, the toilet bowl 1100 may have a solid-liquid separation structure separating solid and liquid by using surface tension. The method of separating and collecting solid feces and liquid feces may be selected according to the need, and is not limited to one particular method. The solid feces may include excrement and tissues, and the liquid feces may include urine and flushing water.

The toilet bowl 1100 may provide liquid feces to the liquid feces treatment apparatus 1200. The liquid feces treatment apparatus 1200 may purify the liquid feces and generate flushing water used in a toilet bowl. The liquid feces treatment apparatus 1200 may supply flushing water to a toilet bowl. Accordingly, the individual feces treatment system 1000 of the present disclosure may save water supplied from the outside of the individual feces treatment system 1000.

The toilet bowl 1100 may provide solid feces to the first solid feces treater 1300. The first solid feces treater 1300 may water-treat the solid feces. For example, the solid feces may go through a precipitation process, a bio-reaction process, and a disinfection process. Sludge may be generated by the water treatment process. The first solid feces treater 1300 may provide the sludge to the second solid feces treater 1400.

The second solid feces treater 1400 may be substantially identical to the solid feces treater 10 described with reference to FIGS. 1 to 15 or the solid feces treater 12 described with reference to FIGS. 20 and 21. The sludge may be the first solid feces. The liquid components discharged from the dehydrator 100 may be supplied to and purified by the liquid component treatment apparatus.

The individual feces treatment system 1000 of the present disclosure may treat liquid feces and solid feces independently. Accordingly, the individual feces treatment system 1000 of the present disclosure may be suitable to be used in an environment without facilities to collect and treat feces.

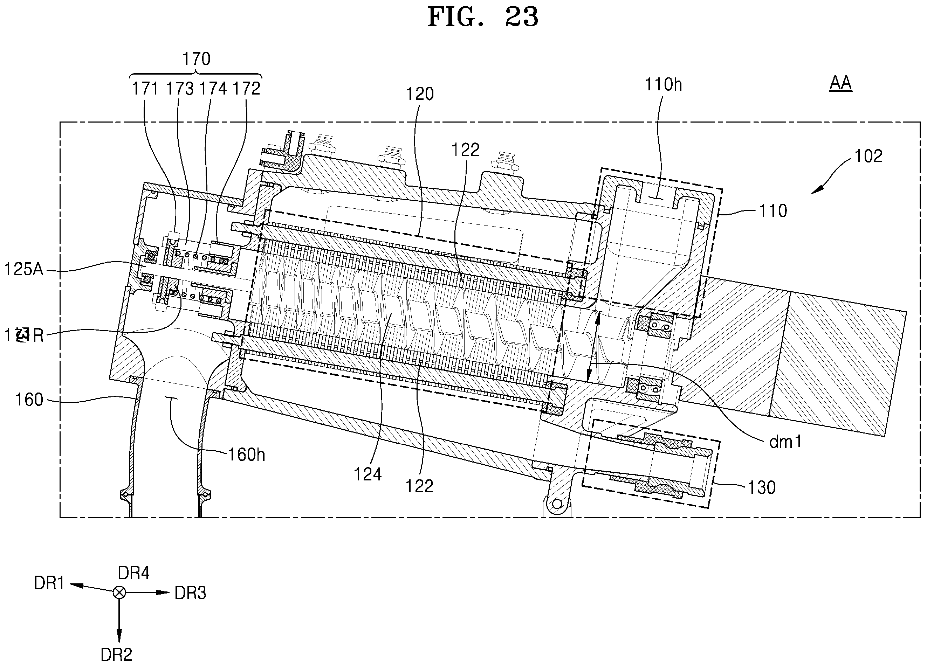

FIG. 23 is a diagram corresponding to the AA region of FIG. 3 to illustrate a dehydrator according to an example embodiment. For the sake of concise explanation, any description substantially identical to the explanations made with reference to FIGS. 6 to 11 may be omitted.

With reference to FIG. 23, a dehydrator 102 may be provided. The dehydrator 102 may be applied to the solid feces treater 10 described with reference to FIGS. 1 to 15 instead of the dehydrator 100 described with reference to FIGS. 6 to 11. The dehydrator 102 may include the first solid feces input element 110, the dehydration element 120, the liquid component discharge pipe 130, a pressure element 170, and the second solid feces discharger 160. The first solid feces input element 110, the dehydration element 120, the liquid component discharge pipe 130, and the second solid feces discharger 160 may be substantially the same as described with reference to FIGS. 6 to 11.

The pressure element 170 may apply pressure to the second solid feces to turn the second solid feces into a plurality of flakes (i.e. thin pieces). The pressure element 170 may include a supporting plate 171, a pressuring plate 172, a plurality of alignment members 173, and a spring 174. The supporting plate 171 may be coupled to a screw axis 124A extending from the dehydration screw 124 in the first direction DR1. The supporting plate 171 may have a fixed position. A distance between the supporting plate 171 and the dehydration element 120 may be constant. When the screw axis 124A rotates, the supporting plate 171 may also rotate. The supporting plate 171 may include a protruding portion 171R inserted into the spring 174. The supporting plate 171 may include alignment holes penetrating the alignment members 173.

The pressuring plate 172 may be provided between the supporting plate 171 and the dehydration element 120. The pressuring plate 172 and the supporting plate 171 may be arranged in order in the first direction DR1. Unlike the supporting plate 171, the pressuring plate 172 may not have a fixed position. The pressuring plate 172 may move in the first direction DR1. In an embodiment, the pressuring plate 172 may be arranged to be parallel with the supporting plate 171. The pressuring plate 172 may apply pressure to the second solid feces discharged from the dehydration element 120. The pressuring plate 172 may include alignment grooves into which the alignment members 173 are inserted and an elastic groove into which the spring 174 is inserted.

The alignment members 173 may extend in the first direction DR1 and penetrate the pressuring plate 172. The alignment members 173 may respectively be inserted into the alignment holes of the supporting plate 171. The alignment members 173 may not be coupled to the supporting plate 171. The alignment members 173 may move in the first direction DR1. When the pressuring plate 172 rotates, the alignment members 173 may rotate around the screw axis 124A. One end of the alignment members 173 may be inserted into the alignment groove of the pressuring plate 172.

The spring 174 may be provided between the pressuring plate 172 and the supporting plate 171. When the pressuring plate 172 and the supporting plate 171 are arranged farthest from each other, the spring 174 may apply force to the supporting plate 171 and the pressuring plate 172 in a direction to increase a distance between the supporting plate 171 and the pressuring plate 172. The spring 174 may push the supporting plate 171 and the pressuring plate 172 with more power when the pressuring plate 172 moves towards the supporting plate 171, compared to when the pressuring plate 172 and the supporting plate 171 are arranged farthest from each other. The protruding portion 171R of the supporting plate 171 may be inserted into one end of the spring 174. For example, an internal diameter of the spring 174 may be substantially identical to a diameter of the protruding portion 171R.

Hereinafter, a process of generating second solid feces in a shape of flakes, by the pressure element 170 is described.

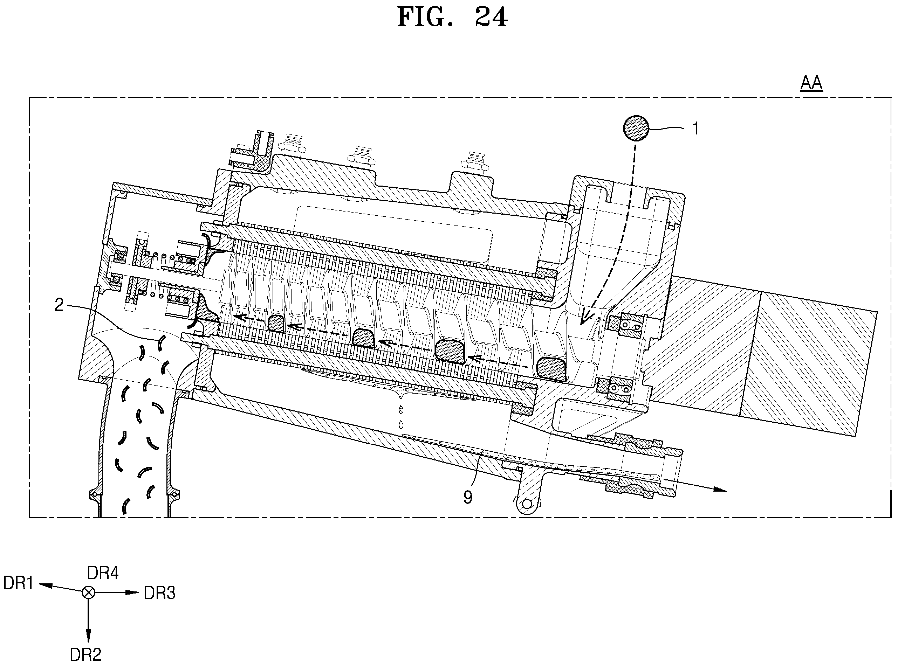

FIG. 24 is a diagram corresponding to the AA region of FIG. 3 to illustrate a process of treating solid feces. For the sake of concise explanation, any description substantially identical to the explanations made with reference to FIG. 16 may be omitted. For concise description, reference numerals for the components of the dehydrator 102 are omitted. The reference numerals for the components of the dehydrator 102 are as shown in FIG. 23.

With reference to FIG. 24, before the second solid feces 2 are provided, the pressuring plate 172 may be in contact with the dehydration element 120. The spring 174 may push the pressuring plate 172 towards the dehydration element 120.

The dehydration element 120 may receive the first solid feces 1 and generate the second solid feces 2. After the second solid feces 2 reach the pressuring plate 172, the pressuring plate 172 may be pushed by the second solid feces 2. When the force of second solid feces 2 pushing the pressuring plate 172 is greater than the force of the spring 174 pushing the pressuring plate 172, the pressuring plate 172 may be apart from the dehydration element 120. The second solid feces 2 may flow into an area between the pressuring plate 172 and the dehydration element 120.

When the pressuring plate 172 is apart from the dehydration element 120, the spring 174 may be compressed and may push the pressuring plate 172 even harder, compared to when the pressuring plate 172 is in contact with the dehydration element 120. The pressuring plate 172 may apply pressure to the second solid feces 2 flowing between the pressuring plate 172 and the dehydration element 120 and rotate. Accordingly, the second solid feces 2 may not be discharged continuously from the pressure element 170 but discharged in several pieces. The second solid feces 2 discharged from the pressure element 170 may have a shape of flakes (i.e., a shape of thin pieces).

The descriptions of embodiments of the technical ideas according to the present disclosure are intended to provide examples to explain the technical ideas of the present disclosure. Accordingly, the technical ideas of the present disclosure are not limited to the embodiments described above, and various modifications and amendments may be made by a person skilled in the art by combining the embodiments, etc., within the scope of the technical ideas of the present disclosure.

Proposed embodiments may be summarized as follows:
A solid feces treater comprising a dehydrator to extract a liquid component from first solid feces to produce second solid feces, a dryer to evaporate a liquid component of the second solid feces to produce third solid feces, and a combustor to burn the third solid feces, wherein the second solid feces has a solid content of about 25 % to about 30 %, and the third solid feces has a solid content greater than or equal to about 90 % and less than about 100 %.

The dehydrator may comprise a dehydration element, and the dehydration element may comprise a plurality of fixed discs and a plurality of moving discs, which are alternately arranged, and a dehydration screw penetrating the plurality of fixed discs and the plurality of moving discs, wherein the plurality of moving discs are arranged to move such that a center of each of the plurality of moving discs rotates around a centerline on which centers of the plurality of fixed discs are arranged.

A distance between a fixed disc and a moving disc immediately adjacent to each other, among the plurality of fixed discs and the plurality of moving discs, may be less than or equal to about 0.1 mm.

The dehydration element may include a first dehydration area and a second dehydration area arranged sequentially in a transfer direction of the dehydration screw, and wherein, among the plurality of fixed discs and the plurality of moving discs, a distance between a fixed disc and a moving disc immediately adjacent to each other in the first dehydration area may be about 0.05 mm, and a distance between a fixed disc and a moving disc immediately adjacent to each other in the second dehydration area may be about 0.03 mm.

The dehydrator may further comprise a discharger including a discharge hole through which second solid feces produced from the dehydration element are discharged, and a cutter to cut the second solid feces discharged from the discharge hole, wherein the second solid feces cut by the cutter may have a pellet shape.

An internal diameter of each of the plurality of moving discs may be less than an internal diameter of each of the plurality of fixed discs.

The dehydrator may further comprise a pressure element to apply pressure on second solid feces discharged from the dehydration element, wherein the second solid feces may be discharged between the pressure element and the dehydration element, and have a flake shape.

The dryer may comprise a first dry chamber into which the second solid feces are input, a first dry screw provided in the first dry chamber, a second dry chamber discharging the third solid feces, and a second dry screw provided in the second dry chamber, wherein the second dry screw may have a thermal resistance higher than that of the first dry screw.

The first dry screw may include aluminum, and the second dry screw may include stainless steel.

The first dry screw and the second dry screw may include a plurality of dry holes penetrating a thread of the first dry screw and at thread of the second dry screw.

Each of the first dry screw and the second dry screw may be provided in a pair, wherein a pair of first dry screws may be arranged such that threads of the first dry screws cross each other, and a pair of second dry screws may be arranged such that threads of the second dry screws cross each other.

The dryer may further comprise a third dry chamber provided between the first dry chamber and the second dry chamber, a third dry screw provided in the third dry chamber, a fourth dry chamber provided between the second dry chamber and the third dry chamber, and a fourth dry screw provided in the fourth dry chamber, wherein the first dry chamber, the third dry chamber, the fourth dry chamber, and the second dry chamber may be arranged to sequentially dry the second solid feces.

The dryer may further comprise an intake element connected to the first dry chamber, the intake element to circulate heat generated from the combustor in the dryer.

A lower portion of the second dry chamber may have a thermal conductivity higher than that of the first dry chamber.

The combustor may comprise a combustion drum defining a combustion path therein, a first grid plate provided at a lower portion of the combustion drum, and an ignition element to combust the third solid feces placed on the first grid plate.

The combustion drum may further include a plurality of first air holes provided under the first grid plate.

The combustion path may further include an air compression area in which air is compressed, wherein the combustion path has a reduced width in the air compression area.

The combustion drum may further include a plurality of second air holes provided adjacent to the air compression area.

The dryer may include a first dry chamber into which the second solid feces are input, a first dry screw provided in the first dry chamber, a second dry chamber to discharge the third solid feces, and a second dry screw provided in the second dry chamber, wherein the second dry screw may have a thermal resistance higher than that of the first dry screw, and the combustion path may be connected to an internal space of the second dry chamber.

The dry chamber may further include a transfer element provided between the second dry chamber and the combustion drum, wherein the transfer element may transfer the third solid feces to the combustion path.

An individual feces treatment system comprising: a toilet bowl, a liquid feces treatment apparatus receiving and treating liquid feces from the toilet bowl, a first solid feces treater receiving solid feces from the toilet bowl and water-treating the solid feces to produce first solid feces in a state of sludge, and a second solid feces treater according to any above-described embodiment for receiving the first solid feces from the first solid feces treatment apparatus and treating the first solid feces.

## Claims

1. A treatment apparatus (10) comprising:
a dehydrator (100) comprising a dehydration element and extracting a liquid component from first material containing solid feces to produce second material containing solid feces;
a dryer (200) evaporating a liquid component of the second material containing solid feces to produce third solid feces; and
a combustor (300) burning the third solid feces,
wherein the dehydrator further comprises:
a discharge element including a discharge hole through which second material containing solid feces produced from the dehydration element are discharged; and
a cutting element cutting the second material containing solid feces discharged from the discharge hole, and
wherein the second material containing solid feces cut by the cutting element have a pellet shape.

2. The treatment apparatus of claim 1, wherein the dehydration element comprising:
a plurality of fixed discs and a plurality of moving discs, which are alternately arranged; and
a dehydration screw penetrating the plurality of fixed discs and the plurality of moving discs, and
wherein the plurality of moving discs move such that a center of each of the plurality of moving discs rotates around a centerline on which centers of the plurality of fixed discs are arranged, and optionally wherein a distance between a fixed disc and a moving disc immediately adjacent to each other, among the plurality of fixed discs and the plurality of moving discs, is less than or equal to 0.1 mm.

3. The treatment apparatus of claim 2, wherein the dehydration element includes a first dehydration area and a second dehydration area arranged sequentially in a transfer direction of the dehydration screw, and
wherein, among the plurality of fixed discs and the plurality of moving discs, a distance between a fixed disc and a moving disc immediately adjacent to each other in the first dehydration area is 0.05 mm, and a distance between a fixed disc and a moving disc immediately adjacent to each other in the second dehydration area is 0.03 mm.

4. The treatment apparatus of claim 2, wherein an internal diameter of each of the plurality of moving discs is less than an internal diameter of each of the plurality of fixed discs.

5. The treatment apparatus of claim 2, wherein the dehydrator further comprises a pressure element applying pressure on second material containing solid feces discharged from the dehydration element, and
wherein the second material containing solid feces are discharged between the pressure element and the dehydration element, and have a flake shape.

6. The treatment apparatus of claim 1, wherein the dryer comprises:
a first dry chamber into which the second material containing solid feces are input;
a first dry screw provided in the first dry chamber;
a second dry chamber discharging the third solid feces; and
a second dry screw provided in the second dry chamber, and
wherein the second dry screw has a thermal resistance higher than that of the first dry screw, and optionally wherein the first dry screw includes aluminum, and
wherein the second dry screw includes stainless steel.

7. The treatment apparatus of claim 6, wherein the first dry screw and the second dry screw include a plurality of dry holes penetrating a thread of the first dry screw and a thread of the second dry screw.

8. The treatment apparatus of claim 6, wherein each of the first dry screw and the second dry screw is provided in a pair, and
wherein a pair of first dry screws is arranged such that threads of the first dry screws cross each other, and a pair of second dry screws is arranged such that threads of the second dry screws cross each other.

9. The treatment apparatus of claim 6, wherein the dryer further comprises:
a third dry chamber provided between the first dry chamber and the second dry chamber;
a third dry screw provided in the third dry chamber;
a fourth dry chamber provided between the second dry chamber and the third dry chamber; and
a fourth dry screw provided in the fourth dry chamber, and
wherein the second material containing solid feces are dried sequentially in the first dry chamber, the third dry chamber, the fourth dry chamber, and the second dry chamber.

10. The treatment apparatus of claim 6, wherein the dryer further comprises an intake element connected to the first dry chamber, and
wherein the intake element circulates heat generated from the combustor in the dryer.

11. The treatment apparatus of claim 6, wherein a lower portion of the second dry chamber has a thermal conductivity higher than that of the first dry chamber.

12. The treatment apparatus of claim 1, wherein the combustor comprises:
a combustion drum defining a combustion path therein;
a first grid plate provided at a lower portion of the combustion drum; and
an ignition element combusting the third material containing solid feces placed on the first grid plate, and optionally wherein the combustion drum further includes a plurality of first air holes provided under the first grid plate, and further optionally wherein the combustion path further includes an air compression area in which air is compressed, and
wherein the combustion path has a relatively narrow width in the air compression area, and yet further optionally wherein the combustion drum further includes a plurality of second air holes provided adjacent to the air compression area.

13. The treatment apparatus of claim 12, wherein the dryer further comprises:
a first dry chamber into which the second material containing solid feces are input;
a first dry screw provided in the first dry chamber;
a second dry chamber discharging the third solid feces; and
a second dry screw provided in the second dry chamber, and
wherein the second dry screw has a thermal resistance higher than that of the first dry screw, and
the combustion path is connected to an internal space of the second dry chamber.

14. An individual treatment system (1000) comprising:
a toilet bowl (1100);
a liquid feces treatment apparatus (1200) receiving and treating liquid feces from the toilet bowl;
a first feces treatment apparatus (1300) receiving solid feces from the toilet bowl and water-treating the solid feces to produce first material containing solid feces in a state of sludge; and
a second feces treatment apparatus (1400) according to claim 1 for receiving the first material containing solid feces from the first material containing solid feces treatment apparatus and treating the first material containing solid feces.
